# EUROPÄISCHE PATENTANMELDUNG

(11) **EP 1 479 434 A1**
(43) Veröffentlichungstag der Anmeldung: **24.11.2004**
(21) Anmeldenummer: 04011600.6
(22) Anmeldetag: 15.05.2004
(51) Int. Cl.: B01J 19/00

(54) **Drehventil für die Festphasensynthese**

(30) Priorität: 17.05.2003 DE 10322330
(71) Anmelder: Heidolph Instruments GmbH & Co.KG, 91126 Schwabach (DE)
(72) Erfinder: Beck, Markus, 92348 Berg/Roderbach (DE); Werner, Klaus, 90552 Röthenbach/Pegnitz (DE); Vollgold, Günter, 91126 Rednitzhembach (DE)
(74) Vertreter: Jany, Peter, Dr.

(57) **Zusammenfassung**

Um eine platzsparendere Bauweise eines Hahns (1) für ein Reaktionsgefäß (3) einer Vorrichtung zum Durchführen einer Parallelsynthese von Verbindungen zu erzielen, wird vorgeschlagen, die Drehachse (7) des Absperrkörpers (13) des Hahns (1) im Bereich der Bohrung (9) in dem Absperrkörper (13) mit der Achse (14) des Fluidkanals (10) zusammenfallen zu lassen. Bevorzugt erstreckt sich der Fluidkanal (10) axial durch den Absperrkörper (13) hindurch.

## Beschreibung

Die Erfindung bezieht sich auf Vorrichtungen zum Durchführen einer Parallelsynthese von Verbindungen, insbesondere auf Vorrichtungen für die Festphasensynthese. Derartige Parallelsynthese-Vorrichtungen werden besonders auf den Gebieten der kombinatorischen Synthese von Wirkstoffen (Pharma-Forschung) und neuen molekularen Materialien sowie beim Erforschen und Optimieren chemischer Reaktionen und neuartiger Katalysatoren verwendet. Dabei werden je nach Anwendungsfall auch besondere Reaktionsbedingungen, wie beispielsweise Feuchtigkeitsausschluß, Sauerstoffausschluß, Vakuum, Inertgas oder genau kontrollierte hohe oder tiefe Temperaturen eingestellt.

Um eine große Anzahl von chemischen Synthesen, beispielsweise von organischen Verbindungen oder in der pharmazeutischen Forschung, herzustellen, ist es bekannt, mit Vorrichtungen für die Parallelsynthese eine multiple, parallele Synthese einer Vielzahl von Einzelverbindungen gleichzeitig herzustellen, um den Zeit- und Kostenaufwand der Herstellung zu minimieren. Entsprechende Vorrichtungen für die Parallelsynthese, insbesondere für die Festphasensynthese, sind beispielsweise in den Dokumenten DE 297 19 919 U1, DE 196 02 464 Al, US 5,762,881 und US 6,126,904 beschrieben.

In einer vorteilhaften Ausführungsform umfaßt eine solche Vorrichtung für die Parallelsynthese, insbesondere für die Festphasensynthese, ein dreiteiliges Reaktionsgefäß. Der mittlere Teil wird von einem zylindrischen Mantelrohr aus einem chemisch beständigen Material, vorzugsweise Glas, PTFE oder PFA gebildet und ist zur Gewährung eines Sichtkontaktes zur Reaktionsflüssigkeit bevorzugt transparent. Der obere Teil, das Kopfteil, enthält das Septum und den Schlauchanschluß zum Evakuieren bzw. zum Schutzgasbegasen. Im Fußteil des Reaktionsgefäßes ist die Fritte, ein Ventil und der Schlauchanschluß zur Absaugeinrichtung oder auch zum Einleiten von perlendem Gas für das Mischen und Bewegen, für das Herausfiltern von Bestandteilen und gereinigten oder gebildeten Reaktionsprodukten oder zum Auffangen von Spüllösemitteln, von Spüllösungen oder zum Absaugen des Produktes untergebracht.

Das Kopfteil kann bedarfsweise ein entsprechendes Ventil aufweisen. Um eine gute Reinigung zu ermöglichen, kann in vorteilhaften Ausführungsformen das dreiteilige Reaktionsgefäß einfach in Mantelrohr, Kopfteil und Fußteil zerlegt werden.

Die Erfindung richtet sich auf eine optimierte Ausführungsform der Ventile an derartigen Reaktionsgefäßen in Vorrichtungen für die Parallelsynthese, insbesondere Festphasensynthese. Unter Ventil wird in diesem Zusammenhang ein handbetätigtes oder ferngesteuertes Absperrorgan zum Absperren oder Freigeben strömender Flüssigkeiten, Gase oder Dämpfe verstanden, das auch als Drehschieber oder Hahn bezeichnet wird. Im folgenden wird die Bezeichnung Hahn verwendet.

Ein solcher Hahn nach dem Stand der Technik erlaubt das schnelle Öffnen und Schließen von Rohrleitungen durch Drehen des konusförmigen oder zylindrischen Hahnkükens oder Absperrkörpers um seine Drehachse quer zur Strömungsrichtung, wodurch eine quer zu seiner Drehachse liegende Bohrung entweder die Verbindung zwischen Einlaß und Auslaß freigibt oder unterbricht. Eine besondere Ausführungsform sind Dreiwege-Hähne, bei denen der Absperrkörper drei T-förmig miteinander verbundene, um 90° versetzte Bohrungen aufweist, und im Gehäuse drei ebenfalls um 90° versetzte Zugänge vorhanden sind. Alle Hähne bzw. Absperrorgane ermöglichen auch eine Einstellung und Regulierung der Durchflußmenge des strömenden Mediums durch unvollständiges Öffnen des Absperrkörpers, so daß nur ein Teil des vollen Öffnungsquerschnitts freigegeben wird.

Im Bereich der Parallelsynthese sind Hähne bzw. Drehventile an den Reaktionsgefäßen bekannt, um die Reaktionsgefäße mit Gasen oder Vakuum beaufschlagen oder Flüssigkeiten zu- oder ableiten zu können. Wenn der Hahn im Fußteil des Reaktionsgefäßes angeordnet ist, kann im geöffneten Zustand die Flüssigkeit abgesaugt werden oder durch Zuführung von Druck zum Reaktionsgefäß aus dem Reaktionsgefäß ausgedrückt werden. Mit einem im Kopfteil angeordneten Hahn kann Gas in das Reaktionsgefäß geleitet oder in dem Reaktionsgefäß ein Vakuum erzeugt werden. Im geschlossenen Zustand wird der Fluidstrom unterbrochen, so daß im Reaktionsgefäß Druck oder Vakuum aufrecht erhalten werden kann.

Die Hähne sind dabei direkt in das (einteilige) Reaktionsgefäß eingearbeitet oder (bei mehrteiligen Reaktionsgefäßen) in dem dicht mit dem eigentlichen Reaktionskörper verbundenen Fuß- oder Kopfteil angeordnet. Das Fuß- oder Kopfteil kann dabei in einer speziellen mechanischen Aufnahme sitzen oder auch nur mit dem Mitteilteil des Reaktionsgefäßes (Mantelrohr) verbunden sein.

Bei den bekannten Ausführungsformen von Hähnen weisen die Achsen des Fluidkanals zum Durchleiten von Flüssigkeit, Gas oder Dampf und die Drehachse des Hahns in unterschiedliche Richtungen, meist im Winkel von 90°. Diese Anordnung hat den Nachteil, daß sie einen hohen Platzbedarf erfordert. Dies ist darauf zurückzuführen, daß einerseits ein ausreichender Platz zum Anordnen und Betätigen des Drehhebels für den Hahn und andererseits ausreichend Platz für den Schlauchanschluß des von dem Hahn betätigten Fluidkanals vorgesehen werden muß. Da der Drehhebel gegenüber dem Schlauchanschluß versetzt angeordnet ist resultiert insgesamt ein hoher Platzbedarf. Dieser hohe Platzbedarf verhindert das enge Aufreihen der Reaktionsgefäße, beispielsweise nebeneinanderstehend oder auf einem Kreisumfang und führt zu einer größeren Bauweise der Vorrichtung für die Parallelsynthese.

Einen hohen Platzbedarf haben auch sogenannte Eck- oder T-Ventile, die aus dem allgemeinen Stand Technik bekannt sind, siehe z.B. die in DE 200 09 723 U1 beschriebene Armatur. Sie umfaßt einen als Absperrkörper dienenden drehbaren Kolben in Form einer einseitig geschlossenen Hülse mit einer seitlichen Austrittsöffnung. Der Kolben ist in zwei rechtwinklig zueinander geformten Rohrstücken drehbar angeordnet. Beim Drehen des Kolbens mittels eines Griffes gibt seine Austrittsöffnung je nach Stellung den Durchfluß frei oder sperrt die Armatur ab. Aufgrund der Umlenkung des Fluidstrom in der Armatur um 90° weist sie für den von Griffstück und Abgang eingenommenen Raum einen hohen Platzbedarf auf.

Der Erfindung liegt unter Berücksichtigung dieses Standes der Technik die Aufgabe zugrunde, einen Hahn für das Reaktionsgefäß einer Vorrichtung zum Durchführen einer Parallelsynthese von Verbindungen, insbesondere für eine Vorrichtung für die Festphasensynthese zu schaffen, der eine platzsparendere Bauweise aufweist, so daß eine engere Anordnung der Reaktionsgefäße und eine verringerte Gesamtgröße der Vorrichtung ermöglicht wird.

Diese Aufgabe wird erfindungsgemäß durch einen Hahn mit den Merkmalen des beigefügten Anspruchs 1 und durch eine Parallelsynthesevorrichtung mit den Merkmalen des beigefügten Anspruchs 17 gelöst. Bevorzugte Ausgestaltungen und Weiterbildungen der Erfindung ergeben sich aus den abhängigen Ansprüchen und der nachfolgenden Beschreibung mit zugehörigen Zeichnungen.

Ein erfindungsgemäßer Hahn für das Reaktionsgefäß einer Vorrichtung zum Durchführen einer Parallelsynthese von Verbindungen, insbesondere für eine Vorrichtung für die Festphasensynthese, umfassend einen Einlaß, einen Auslaß, einen Fluidkanal zum Durchleiten von Flüssigkeit, Gas oder Dampf vom Einlaß zum Auslaß und einen um eine Drehachse drehbaren Absperrkörper mit einer quer zur Drehachse verlaufenden Bohrung, die in einer ersten Drehstellung den Fluidkanal öffnet und in einer zweiten Drehstellung, die gegenüber der ersten Drehstellung um die Drehachse gedreht ist, den Fluidkanal unterbricht, weist also die Besonderheit auf, daß die Drehachse des Absperrkörpers im Bereich der Bohrung in dem Absperrkörper mit der Achse des Fluidkanals zusammenfällt.

Dadurch, daß im Gegensatz zum Stand der Technik die quer zur Drehachse verlaufende Bohrung in dem Absperrkörper nicht um eine Drehachse gedreht wird, die quer zum Fluidkanal, sondern in Richtung des Fluidkanals (d.h. in Strömungsrichtung) verläuft, wird die Voraussetzung geschaffen, eine kompaktere Bauweise des Hahns bzw. des Fußteils eines entsprechenden Reaktionsgefäßes zu erzielen.

Ein vorteilhaftes zusätzliches Merkmal kann darin bestehen, daß ein Abschnitt des Fluidkanals auf der Einlaßseite oder der Auslaßseite der Bohrung in dem drehbaren Absperrkörper ausgebildet ist. Dadurch wird eine integrierte, platzsparende Bauweise erzielt.

Ein anderes vorteilhaftes Merkmal kann darin bestehen, daß der Fluidkanal im Bereich der Bohrung in dem Absperrkörper geradlinig ausgebildet ist und die Drehachse des drehbaren Absperrkörpers in der Achse dieses geradlinigen Bereiches liegt. Dabei kann ferner vorteilhafterweise vorgesehen sein, daß der geradlinige Bereich von der Bohrung in dem Absperrkörper in Richtung zu dem Auslaß verläuft, wobei sich bevorzugt der geradlinige Bereich von der Bohrung in dem Absperrkörper bis zum Auslaß erstreckt. In einer alternativen Ausführungsform ist vorgesehen, daß der geradlinige Bereich von der Bohrung in dem Absperrkörper in Richtung zu dem Einlaß verläuft, wobei sich bevorzugt der geradlinige Bereich von der Bohrung in dem Absperrkörper bis zum Einlaß erstreckt. Durch diese Merkmale wird sowohl eine platzsparende Bauweise als auch eine kostengünstige Herstellung ermöglicht.

Dieser Vorteil wird insbesondere in einer bevorzugten Ausführungsform erzielt, bei der der Fluidkanal auf seiner gesamten Länge von der Bohrung in dem Absperrkörper bis zum Auslaß, d.h. der Bereich des Fluidkanals zwischen der Bohrung in dem Absperrkörper und dem Auslaß geradlinig ausgebildet ist, so daß sich der geradlinige Bereich des Fluidkanals axial durch den Absperrkörper hindurch geradlinig von der Bohrung in dem Absperrkörper bis zum Auslaß erstreckt.

Nach einem bevorzugten Merkmal ist der Einlaß und/oder der Auslaß in dem drehbaren Absperrkörper angeordnet, also in den drehbaren Absperrkörper integriert. Wenn der Einlaß und/oder der Auslaß des Hahns in den drehbaren Absperrkörper integriert ist, wird eine sehr platzsparende, kompakte Bauweise erzielt.

In bevorzugten Ausführungsformen weist der Einlaß und/oder der Auslaß einen Schlauchanschluß auf. In besonders vorteilhaften Weiterbildungen ist der Schlauchanschluß in dem Absperrkörper angeordnet, d.h. in den Absperrkörper integriert, und/oder der mittels des Schlauchanschlusses angeschlossene Schlauch mündet geradlinig auf den Fluidkanal im Bereich des Schlauchanschlusses oder der mittels des Schlauchänschlusses angeschlossene Schlauch mündet in der Drehachse des Absperrkörpers liegend auf den Schlauchanschluß.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. Es zeigen:
- Fig. 1: eine perspektivische Ansicht des Fußteils eines Reaktionsgefäßes mit Hahn und Schlauchanschluß nach dem Stand der Technik,
- Fig. 2: eine Seitenansicht zu Fig. 1,
- Fig. 3: einen Schnitt zu Fig. 2,
- Fig. 4: einen Schnitt durch ein Fußteil mit einem erfindungsgemäßen Hahn,
- Fig. 5: eine Seitenansicht eines Fußteils mit einem erfindungsgemäßen Hahn in geöffneter Stellung,
- Fig. 6: einen Schnitt zu Fig. 5,
- Fig. 7: eine Seitenansicht eines Fußteils mit einem erfindungsgemäßen Hahn in geschlossener Stellung,
- Fig. 8: einen Schnitt zu Fig. 7 und
- Fig. 9: einen Ausschnitt einer Vorrichtung für die Parallelsynthese mit Reaktionsgefäßen, die im Fußteil erfindungsgemäße Hähne aufweisen.

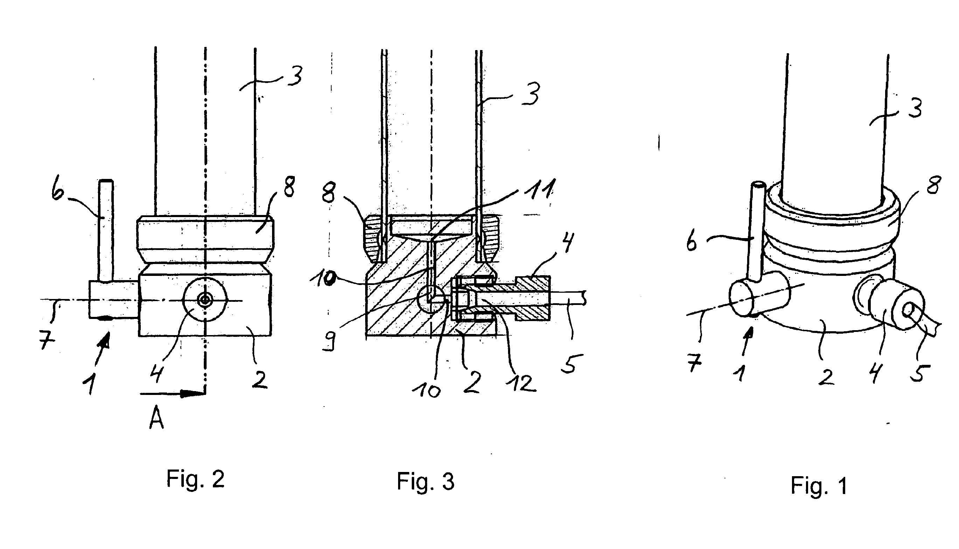

Die Figuren 1 bis 3 veranschaulichen die Ausbildung und Anordnung eines Hahns 1 nach dem Stand der Technik an einem Fußteil eines in Form eines zylindrischen Mantelrohres ausgebildeten Reaktionsgefäßes 3 einer Vorrichtung zum Durchführen einer Parallelsynthese. Das Fußteil 2 weist einen Schlauchanschluß 4 auf, mit dem ein Schlauch 5 an dem Fußteil 2 zum Zuführen oder Ableiten von Flüssigkeit, Gas oder Dampf in das Reaktionsgefäß 3 angeschlossen werden kann.

Die Fluidverbindung zwischen Schlauch 5 und dem Reaktionsgefäß 3 kann durch den Hahn 1 geöffnet oder unterbrochen werden. Hierzu weist der Hahn einen Drehhebel 6 auf, mittels dessen er um eine Drehachse 7 gedreht werden kann. Das Reaktionsgefäß 3 ist mittels eines Überwurf-Klemmrings 8 mit dem Fußteil 2 verbunden.

Der Hahn 1 umfaßt einen im Inneren des Fußteils 2 angeordneten Absperrkörper, der um die Drehachse 7 drehbar ist und mit einer Bohrung 9 versehen ist, die in einer ersten Drehstellung den Fluidkanal 10 zwischen Einlaß 11 und Auslaß 12 öffnet und in einer zweiten Drehstellung die Fluidverbindung des Fluidkanals 10 unterbricht. Insbesondere an Fig. 1 ist zu erkennen, daß die konventionelle Bauweise des Hahns 1 in Verbindung mit dem versetzt hierzu angeordneten Schlauchanschluß 4 bzw. Schlauch 5 einen hohen Platzbedarf erfordert, so daß mehrere benachbarte Reaktionsgefäße 3 in einem ausreichenden Abstand zueinander angeordnet werden müssen.

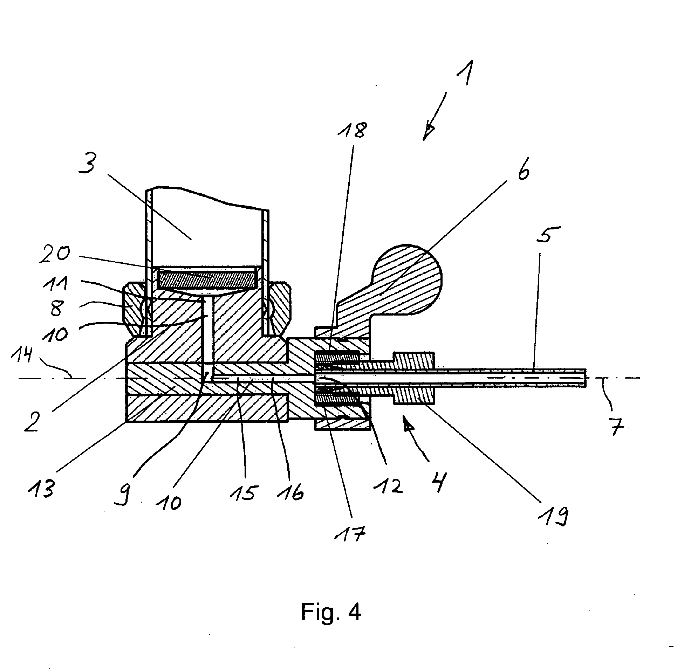

Die Fig. 4 zeigt einen Schnitt durch einen erfindungsgemäßen Hahn 1 an dem Fußteil 2 eines Reaktionsgefäßes 3 einer Vorrichtung zum Durchführen einer Parallelsynthese. Er umfaßt ebenfalls einen Einlaß 11 und einen Auslaß 12, wobei wie in Fig. 3 je nach Anwendungsfall auch der Einlaß als Auslaß und der Auslaß als Einlaß dienen kann. Zwischen Einlaß 11 und Auslaß 12 ist ein Fluidkanal 10 zum Durchleiten von Flüssigkeit, Gas oder Dampf vom Einlaß 11 zum Auslaß 12 gebildet.

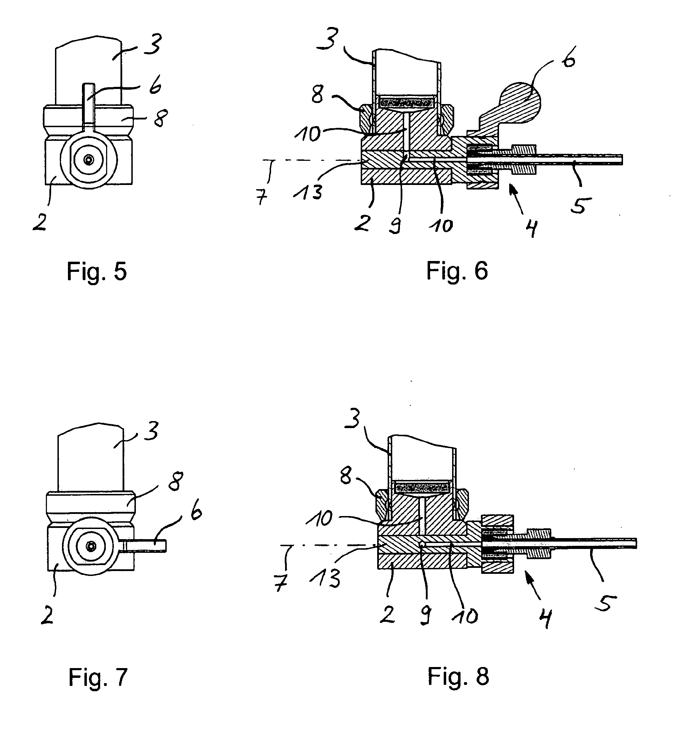

Ferner ist ein um eine Drehachse 7 drehbarer Absperrkörper 13 vorhanden, der eine quer zur Drehachse 7 verlaufende Bohrung 9 aufweist, vorhanden. Die Bohrung 9 öffnet in der dargestellten ersten Drehstellung den Fluidkanal 10 und unterbricht in einer zweiten Drehstellung, die gegenüber der ersten Drehstellung um die Drehachse 7 gedreht ist (siehe Fig. 8) den Fluidkanal 10. Zum handbetätigten Drehen des Absperrkörpers 13 weist der Hahn 1 einen Drehhebel 6 auf.

Im Bereich der Bohrung 9 in dem Absperrkörper 13 fällt die Drehachse 7 des Absperrkörpers 13 mit der Achse 14 des Fluidkanals 10 zusammen. In der in Fig. 4 dargestellten Ausführungsform gilt dies für einen Abschnitt 15 des Fluidkanals 10 auf der Auslaßseite 12 der Bohrung 9 in dem drehbaren Absperrkörper 13; in anderen Ausführungsformen kann dieses Merkmal entsprechend für die Einlaßseite 11 zutreffen.

In Fig. 4 ist ferner zu erkennen, daß der Fluidkanal 10 im Bereich der Bohrung 9 in dem Absperrkörper 13 geradlinig ausgebildet ist und die Drehachse 7 des drehbaren Absperrkörpers 13 in der Achse 14 dieses geradlinigen Bereichs 16 liegt, wobei der geradlinige Bereich 16 von der Bohrung 9 in dem Absperrkörper 13 in Richtung zu dem Auslaß 12 verläuft und sich der geradlinige Bereich 16 von der Bohrung 9 in dem Absperrkörper 13 bis zum Auslaß 12 erstreckt.

Dadurch, daß der Fluidkanal 10 auf seiner gesamten Länge von der Bohrung 9 in dem Absperrkörper 13 bis zum Auslaß 12 geradlinig ausgebildet ist, so daß sich der geradlinige Bereich 16 des Fluidkanals 10 axial durch den Absperrkörper 13 hindurch geradlinig von der Bohrung 9 in dem Absperrkörper 9 bis zum Auslaß 12 erstreckt, wird erreicht, daß der Fluidkanal geradlinig und ohne Umlenkung von der Bohrung 9 bis zum Auslaß 12 axial durch den Absperrkörper 13 hindurch verläuft. Der Drehhebel 7 kann dicht benachbart zu dem Auslaß 12 bzw. der Schlauchverschraubung 19 angeordnet werden, um beim Drehen des Drehhebels 7 mit dem Absperrkörper 13 um dessen Drehachse 7 bleibt diese enge räumliche Anordnung erhalten, ohne daß zusätzlicher Platzbedarf für sich ausweitende geometrische Strukturen erforderlich wäre.

Die Bohrung 9 in dem Absperrkörper 13 ist eine Sackbohrung, die in einem Winkel, bevorzugt in einem Winkel von 90°, zu dem im Bereich der Bohrung 9 in dem Absperrkörper 13 ausgebildeten Fluidkanal 10 angeordnet ist.

Durch die erfindungsgemäße Ausbildung ist es möglich, wie in Fig. 4 dargestellt ist, den Auslaß 12 in den drehbaren Absperrkörper 13 zu integrieren. Dabei weist der Auslaß 12 vorteilhafterweise einen Schlauchanschluß 4 zum Befestigen des Schlauches 5 auf. Der Schlauchanschluß 4 ist also in dem Absperrkörper 13 angeordnet. Der Schlauchanschluß 4 umfaßt eine Klemmhülse 17 zum Befestigen und Dichten des Schlauches 5, einen Gewindeeinsatz 18 zur Erzielung einer hohen Dauerfestigkeit und eine Schlauchverschraubung 19 zur lösbaren Herstellung der Schlauchverbindung. Der Schlauch 5 ist also mittels des Schlauchanschlusses 4 lösbar mit dem Hahn 1 verbunden. Der Schlauch 5 kann beispielsweise aus PTFE bestehen.

Im Bereich des Schlauchanschlusses 4 mündet der mittels des Schlauchanschlusses 4 angeschlossene Schlauch 5 geradlinig auf den Fluidkanal 10. Ferner ist zu erkennen, der mittels des Schlauchanschlusses 4 angeschlossene Schlauch 5 in der Drehachse 7 des Absperrkörpers 13 liegend auf den Schlauchanschluß 4 mündet. Beim Öffnen oder Schließen des Hahns 1 dreht sich somit der Schlauch 5 im Bereich des Schlauchanschlusses 4 ebenfalls um seine Längsachse; diese Bewegung des Schlauches 5 wird durch seine Flexibilität ermöglicht und stellt in der praktischen Anwendung des Hahnes 1 keinen Nachteil dar.

In Fig. 4 ist noch eine Fritte 20 dargestellt, die in das Fußteil 2 integriert ist. Wenn das Fußteil 2 von dem Reaktionsgefäß 3 abgenommen wird, läßt sich die Fritte 20 leicht reinigen oder austauschen.

Die Figuren 5 bis 8 veranschaulichen die Funktionsweise des erfindungsgemäßen Hahns 1; in den Figuren 5 und 6 ist der Hahn 1 in der ersten, geöffneten Drehstellung und in den Figuren 7 und 8 in der zweiten, geschlossenen Drehstellung dargestellt. Der Drehwinkel zwischen der ersten und zweiten Drehstellung beträgt vorteilhafterweise zwischen 5° und 180°, vorzugsweise zwischen 45° und 135° und bevorzugt zwischen 80° und 100°.

In dem in den Figuren 5 bis 8 dargestellten Ausführungsbeispiel beträgt der Drehwinkel etwa 90°. Ein Drehwinkel von 90° ist für den Benutzer leicht erkennbar und einstellbar, auch ohne den Drehwinkel begrenzende Anschläge. Der erforderliche Drehwinkel hängt von dem Durchmesser des Fluidkanals 10 und der Bohrung 9 ab und kann in anderen Ausführungsformen auch durch gebräuchliche Anschlagselemente begrenzt werden.

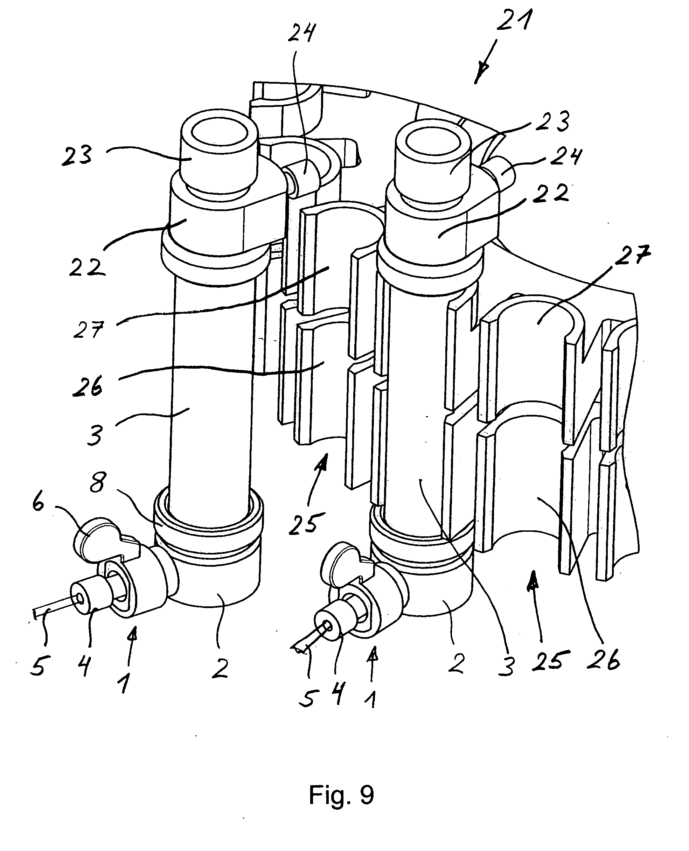

Die Fig. 9 veranschaulicht einen Ausschnitt einer Vorrichtung zum Durchführen einer parallelen Festphasensynthese 21 mit Reaktionsgefäßen 3, die am Fußteil 2 erfindungsgemäße Hähne 1 aufweisen. Die Reaktionsgefäße 3 sind mit einem Kopfteil 22 versehen, in dem sich das Septum 23 und ein Kopfteil-Schlauchanschluß 24 befindet. Reaktionsgefäß 3, Fußteil 2 und Kopfteil 22 können einteilig, zweiteilig oder dreiteilig ausgebildet sein. Bevorzugt ist die dreiteilige Ausbildung, da in diesem Fall das Reaktionsgefäß 3, das Fußteil 2 und das Kopfteil 22 leicht geöffnet und getrennt werden können, beispielsweise zum reinigen.

Die erfindungsgemäßen Hähne 1 sind in der in Fig. 9 dargestellten Ausführungsform in den Fußteilen 2 der Reaktionsgefäße 3 angeordnet. Die Reaktionsgefäße 3 werden in entsprechend ausgebildete Aufnahmen 25 der Parallelsynthesevorrichtung 21 montiert. Dabei kann wie dargestellt vorgesehen sein, daß die Aufnahme 25 zwei übereinander liegende, funktionell unterschiedliche Zonen aufweist, nämlich eine untere Heizzone 26 und eine obere Kühlzone 27, beispielsweise für die Rückkondensation von Lösungsmitteln.

Der Vorteil der erfindungsgemäßen Hähne 1 besteht darin, daß die Reaktionsgefäße 3 eng benachbart, beispielsweise in reihen- oder kreisförmiger Anordnung, angeordnet werden können. Dadurch läßt sich eine kompaktere, platzsparendere Parallelsynthesevorrichtung 21 realisieren, als dies mit aus dem Stand der Technik bekannten Hähnen 1 gemäß Fig. 1 möglich ist. Dabei werden die Auslässe der Hähne 1 wie in Fig. 9 dargestellt bevorzugt quer zur reihen- bzw. kreisförmigen Anordnung der Reaktionsgefäße 3 orientiert.

Die Vorteile der Erfindung liegen jedoch nicht ausschließlich im Bereich des Platzgewinns, sondern die erfindungsgemäßen Hähne sind auch kostengünstig herstellbar und ermöglichen eine kompaktere Bauweise der Vorrichtung zur Parallelsynthese 21, so daß diese ein geringeres Gewicht aufweisen kann und ein geringerer Aufwand zum Heizen oder Kühlen einer gegebenen Anzahl von Aufnahmen 25 und Reaktionsgefäßen 3 sowie ggf. zum Bewegen und Schütteln der Reaktionsgefäße 3 während der Synthese erforderlich ist.

### Bezugszeichenliste

- 1: Hahn
- 2: Fußteil
- 3: Reaktionsgefäß
- 4: Schlauchanschluß
- 5: Schlauch
- 6: Drehhebel
- 7: Drehachse
- 8: Überwurf-Klemmring
- 9: Bohrung
- 10: Fluidkanal
- 11: Einlaß
- 12: Auslaß
- 13: Absperrkörper
- 14: Achse zu 10
- 15: Abschnitt
- 16: geradliniger Bereich
- 17: Klemmhülse
- 18: Gewindeeinsatz
- 19: Schlauchverschraubung
- 20: Fritte
- 21: Vorrichtung zur Parallelsynthese
- 22: Kopfteil
- 23: Septum
- 24: Kopfteilschlauchanschluß
- 25: Aufnahme
- 26: Heizzone
- 27: Kühlzone

## Patentansprüche

1. Hahn (1) für das Reaktionsgefäß (3) einer Vorrichtung (21) zum Durchführen einer Parallelsynthese von Verbindungen, insbesondere für eine Vorrichtung für die Festphasensynthese, umfassend einen Einlaß (11), einen Auslaß (12), einen Fluidkanal (10) zum Durchleiten von Flüssigkeit, Gas oder Dampf vom Einlaß (11) zum Auslaß (12) und einen um eine Drehachse (7) drehbaren Absperrkörper (13) mit einer quer zur Drehachse (7) verlaufenden Bohrung (9), die in einer ersten Drehstellung den Fluidkanal (10) öffnet und in einer zweiten Drehstellung, die gegenüber der ersten Drehstellung um die Drehachse (7) gedreht ist, den Fluidkanal (10) unterbricht,
**dadurch gekennzeichnet, daß**
die Drehachse (7) des Absperrkörpers (13) im Bereich der Bohrung (9) in dem Absperrkörper (13) mit der Achse (14) des Fluidkanals (10) zusammenfällt.

2. Hahn (1) nach Anspruch 1, **dadurch gekennzeichnet, daß** ein Abschnitt (15) des Fluidkanals (10) auf der Einlaßseite (11) oder der Auslaßseite (12) der Bohrung (9) in dem drehbaren Absperrkörper (13) ausgebildet ist.

3. Hahn (1) nach Anspruch 2, **dadurch gekennzeichnet, daß** die Bohrung (9) in dem Absperrkörper (13) eine Sackbohrung ist, die in einem Winkel, bevorzugt in einem Winkel von 90 Grad, zu dem im Bereich der Bohrung (9) in dem Absperrkörper (13) ausgebildeten Fluidkanal (10) angeordnet ist.

4. Hahn (1) nach einem der vorhergehenden Ansprüche, **dadurch gekennzeichnet, daß** der Fluidkanal (10) im Bereich (16) der Bohrung (9) in dem Absperrkörper (13) geradlinig ausgebildet ist und die Drehachse (7) des drehbaren Absperrkörpers (13) in der Achse (14) dieses geradlinigen Bereiches liegt.

5. Hahn (1) nach Anspruch 4, **dadurch gekennzeichnet, daß** der geradlinige Bereich (16) von der Bohrung (9) in dem Absperrkörper (13) in Richtung zu dem Auslaß (12) verläuft.

6. Hahn (1) nach Anspruch 5, **dadurch gekennzeichnet, daß** sich der geradlinige Bereich (16) von der Bohrung (9) in dem Absperrkörper (13) bis zum Auslaß (12) erstreckt.

7. Hahn (1) nach Anspruch 6, **dadurch gekennzeichnet, daß** der Fluidkanal (10) auf seiner gesamten Länge von der Bohrung (9) in dem Absperrkörper (13) bis zum Auslaß (13) geradlinig ausgebildet ist, so daß sich der geradlinige Bereich (16) des Fluidkanals (10) axial durch den Absperrkörper (13) hindurch geradlinig von der Bohrung (9) in dem Absperrkörper (13) bis zum Auslaß (12) erstreckt.

8. Hahn (1) nach Anspruch 4, **dadurch gekennzeichnet, daß** der geradlinige Bereich (16) von der Bohrung (9) in dem Absperrkörper (13) in Richtung zu dem Einlaß (11) verläuft.

9. Hahn (1) nach Anspruch 8, **dadurch gekennzeichnet, daß** sich der geradlinige Bereich (16) von der Bohrung (9) in dem Absperrkörper (13) bis zum Einlaß (11) erstreckt.

10. Hahn (1) nach einem der vorhergehenden Ansprüche, **dadurch gekennzeichnet, daß** der Einlaß (11) und/oder der Auslaß (12) in dem drehbaren Absperrkörper (13) angeordnet ist.

11. Hahn (1) nach einem der vorhergehenden Ansprüche, **dadurch gekennzeichnet, daß** der Einlaß (11) und/oder der Auslaß (12) einen Schlauchanschluß (4) aufweist.

12. Hahn (1) nach Anspruch 11, **dadurch gekennzeichnet, daß** der Schlauchanschluß (4) in dem Absperrkörper (13) angeordnet ist.

13. Hahn (1) nach Anspruch 11, **dadurch gekennzeichnet, daß** der mittels des Schlauchanschlusses (4) angeschlossene Schlauch (5) geradlinig auf den Fluidkanal (16) im Bereich des Schlauchanschlusses (4) mündet.

14. Hahn (1) nach Anspruch 11, **dadurch gekennzeichnet, daß** der mittels des Schlauchanschlusses (4) angeschlossene Schlauch (5) in der Drehachse (7) des Absperrkörpers (13) liegend auf den Schlauchanschluß (5) mündet.

15. Hahn (1) nach einem der vorhergehenden Ansprüche, **dadurch gekennzeichnet, daß** der Winkel zwischen der ersten Drehstellung und der zweiten Drehstellung zwischen 5 Grad und 180 Grad, vorzugsweise zwischen 45 Grad und 135 Grad und bevorzugt zwischen 80 Grad und 100 Grad beträgt.

16. Hahn (1) nach einem der vorhergehenden Ansprüche, **dadurch gekennzeichnet, daß** er einen Drehhebel (6) zum handbetätigten Drehen des Absperrkörpers (13) aufweist.

17. Vorrichtung (21) zum Durchführen einer Parallelsynthese von Verbindungen, insbesondere eine Vorrichtung für die Festphasensynthese, umfassend eine Mehrzahl von Reaktionsgefäßen (3) mit jeweils einem Kopfteil (22) und einem Fußteil (2), **dadurch gekennzeichnet, daß** mindestens ein Reaktionsgefäß (3) einen Hahn (1) nach einem der Ansprüche 1 bis 16 aufweist.

18. Vorrichtung (21) nach Anspruch 17, **dadurch gekennzeichnet, daß** der mindestens eine, nach einem der Ansprüche 1 bis 16 ausgebildete Hahn (1) im oder am Fußteil (2) des Reaktionsgefäßes (3) angeordnet ist.

19. Vorrichtung (21) nach Anspruch 17 oder 18, **dadurch gekennzeichnet, daß** in das Fußteil (2) eine Fritte (20) integriert ist.

20. Vorrichtung (21) nach einem der Ansprüche 17 bis 19, **dadurch gekennzeichnet, daß** die Reaktionsgefäße (3) eng benachbart, insbesondere in reihen- oder kreisförmiger Anordnung angeordnet sind.

21. Vorrichtung (21) nach Anspruch 20, **dadurch gekennzeichnet, daß** die Auslässe (12) der Hähne (1) quer zur Reihen- bzw. kreisförmigen Anordnung der Reaktionsgefäße (3) orientiert sind.
